# EUROPEAN PATENT APPLICATION

(11) **EP 3 081 826 A1**
(43) Date of publication of application: **19.10.2016**
(21) Application number: 16250008.6
(22) Date of filing: 11.04.2016
(51) Int. Cl.: F16D 65/12

(54) **BRAKE DISCS**

(30) Priority: 15.04.2015 GB 201506523
(71) Applicant: Eurac Limited, Poole, Dorset BH12 4NJ (GB)
(72) Inventor: Eggleston, David, Wimborne, Dorset BH21 2HL (GB)
(74) Representative: Atkinson, Ralph

(57) **Abstract**

A brake disc (401) for a vehicle having a hub (403) to be secured to a wheel or an axle of a vehicle, such that it will rotate about an axis (B). The brake disc also has a brake member (402) comprising an annular friction ring (501) having an inner radius (503) and an outer radius (504), and an axially extending hollow cylindrical flange (502) having an inner surface and an outer surface. The hub is a casting which extends over both the inner surface and the outer surface of the flange. The hub (403) is formed of a first material whilst the friction ring (501) is formed of a second material, and the first material has a lower density, a lower melting point, and a higher coefficient of linear thermal expansion than the second material.

## Description

### Cross Reference to Related Applications

This application claims priority from United Kingdom Patent Application No. 15 06 523.8, filed 15 April 2015.

### Technical Field

The present invention relates to brake discs for vehicles according to the preamble of claim 1, and a method of manufacture of a brake disk according to the preamble of claim 11.

### Background Art

A brake disc of a vehicle comprises a friction ring that rotates with a ground-engaging wheel of the vehicle and is gripped by caliper-operated pads to slow the vehicle down when required. The friction ring must be able to resist both wear from the brake pads and heat generated by the braking. For these reasons friction rings are conventionally made of cast iron.

However, as is well known, cast iron is a relatively heavy material for use in a sports car: it is, for instance, about two and a half times as heavy as aluminium. Therefore, to reduce the weight of the disc brake as a whole, the friction ring may be carried on a hub formed of lighter material such as aluminium or an aluminium alloy. The hub, sometimes known as a "top hat", is in use connected to the ground-engaging wheel or an axle of the wheel.

This so-called "composite" form of construction (which should not be confused with the possible use of fibre-reinforced plastics materials) contrasts with monolithic forms in which the friction ring and the hub are integrally formed from the same material in that it requires a connection between the hub and the friction ring that will withstand both rotational forces in braking (and acceleration) and transverse forces in cornering. Various kinds of such connection have been previously proposed.

It is known from DE 10 2009 049 315 A1 and US 8,844,685 B2 to cast the hub on to the friction ring whereby the friction ring and the hub are formed with castellations mutually intercalated in the plane of the friction ring.

It is also known from US 2014/0151166 A1 to cast a hub onto a friction ring formed with axially extending teeth to create a coupling therebetween. The material used for the friction ring has a higher melting point than the material used for the hub.

It is also known from EP 1 426 644 A2 to form the friction ring with an axial stub on it. The axial stub includes recesses in to which projections from the hub protrude.

### Brief Summary of the Invention

According to a first aspect of the present invention, there is provided a brake disc for a vehicle of the aforesaid type, having the characterising features set out in claim 1.

According to a second aspect of the present invention, there is provided a method of manufacturing a brake disc of the aforesaid type having the characterising features set out in claim 11.

### Brief Description of the Drawings

Figure 1 shows a prior art brake disc **101;**
Figure 2A is a side elevation of the prior art brake disc **101;**
Figure 2B is a vertical cross section of the prior art brake disc **101;**
Figure 3 is a cross section at **W-W** of Figure 2A of the prior art brake disc **101;**
Figure 4 illustrates a brake disc **401** according to the present invention;
Figure 5A is a side elevation of the brake disc **401;**
Figure 5B is a vertical cross section of the brake disc **401;**
Figure 6 is a cross section at **X-X** of Figure 5A showing the brake disc **401;**
Figure 7 is a vertical cross section of the brake disc **401** including also a circumferential channel **701;**
Figure 8 is a vertical cross section of brake disc **401** including also a hub casting **801** that extends through the brake member **402** and axially outwards;
Figure 9 is a vertical cross section of the brake disc **401** including also radially extending nubs **901** and **902;** and
Figure 10 is a cross section at **Y-Y** of Figure 9 showing the radially extending nubs **901** and **902;**
Figure 11 is a vertical cross section of the brake disc **401** including also holes **1101** and **1102;** and
Figure 12 is a cross section at **Z-Z** of Figure 11 showing holes **1101** and **1102.**

### Detailed Description of the Invention

### Figure 1

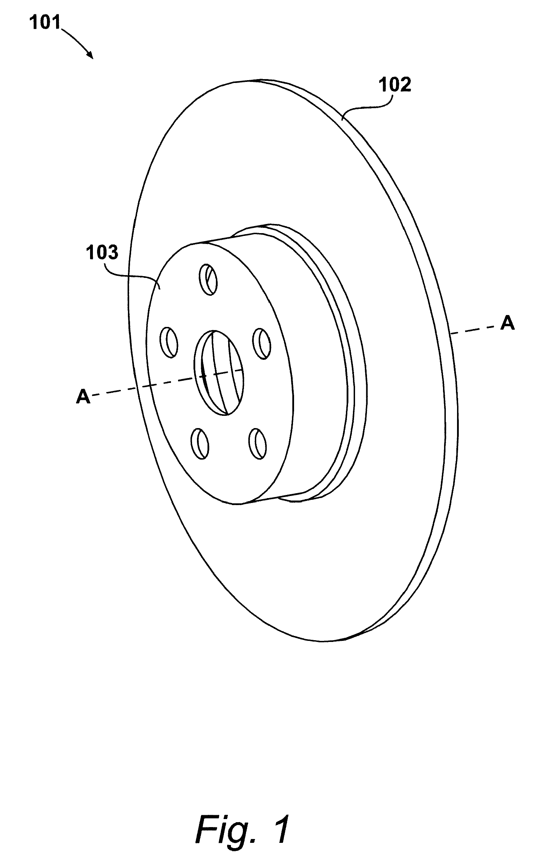

A brake disc **101** of the prior art is shown in Figures 1 to 4.

The brake disc **101** comprises a friction ring **102** made of cast iron and a hub **103** made of cast aluminium alloy for connection to a road wheel or an axle of a vehicle (not shown). The friction ring **102** is annular about an axis **A,** which, when fitted to a vehicle, is the axis of rotation of the road wheel or axle.

### Figures 2A & 2B

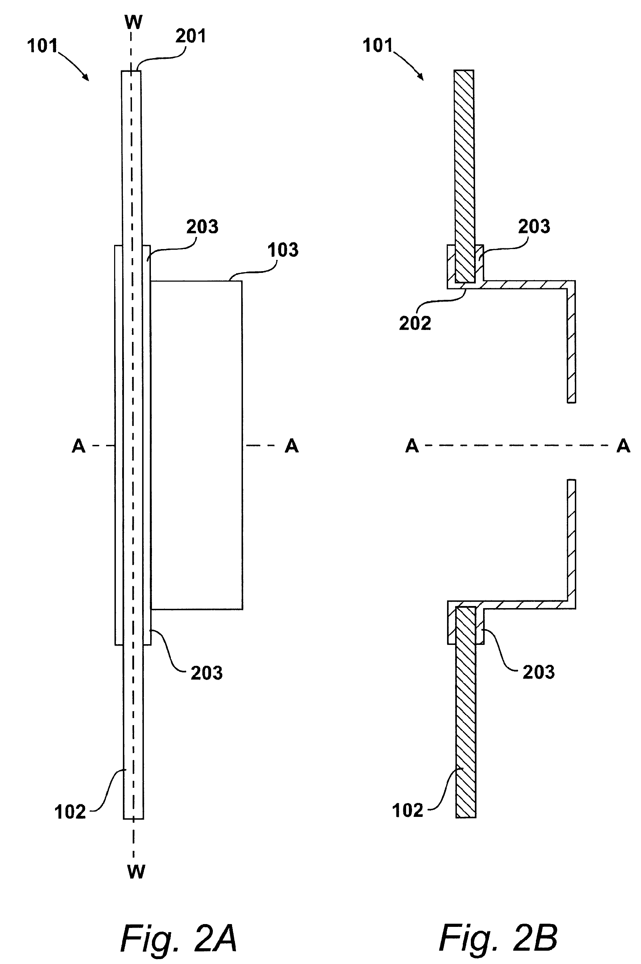

The brake disc **101** is shown in side elevation in Figure 2A, and in vertical cross section through its axis **A** in Figure 2B.

The brake disc **101** has an inner radius **201** defined by the friction ring **102,** and an outer radius **202** defined by the hub **103.** The hub **103** is cast on to the friction ring **102,** and has a radially extending flange **203** cast over the horizontally inner margins of the friction ring **102.**

### Figure 3

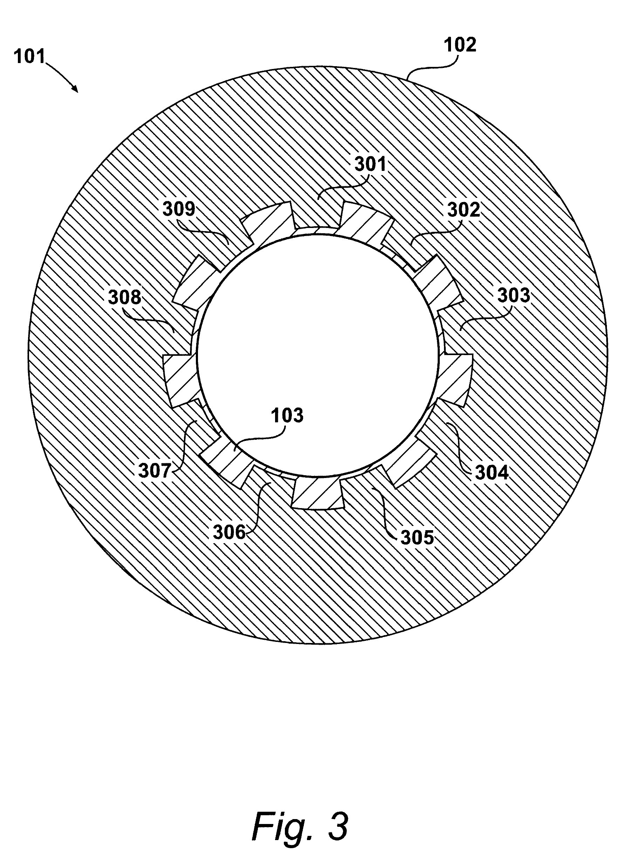

A cross sectional view of the brake disc **101** is shown in Figure 3, along the line **W-W** identified in Figure 2A.

As shown in Figure 3, the friction ring **102** is formed with inwardly directed castellations **301, 302, 303, 304, 305, 306, 307, 308,** and **309** with spaces between them that are filled by the aluminium alloy when the hub **103** is cast. It will be appreciated that, for simplicity of illustration, only a few castellations **301** to **309** are shown in Figure 3, and in practice there may be more.

### Figure 4

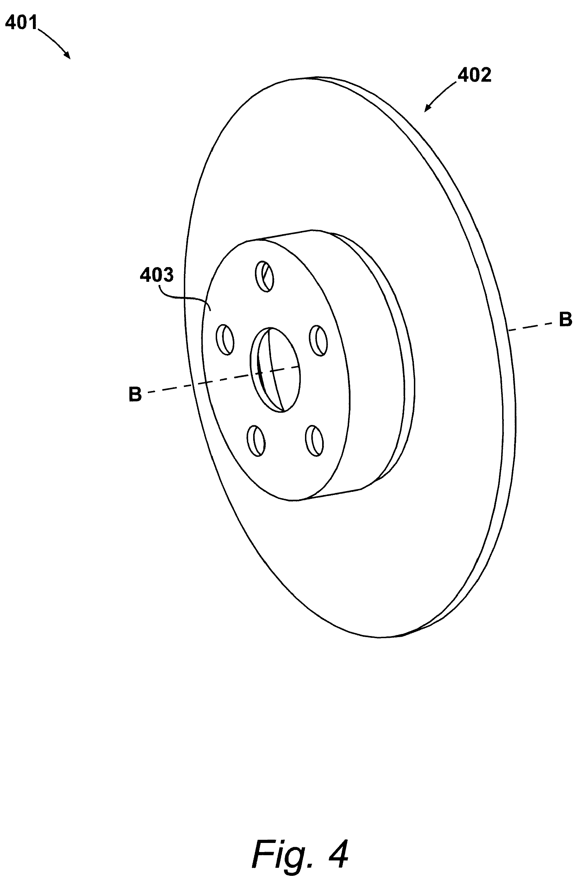

A brake disc **401** according to the present invention is illustrated in Figure 4, which in the present embodiment is a solid disc brake for fitting to a passenger vehicle. However, it will be appreciated by those skilled in the art that the principles of the present invention may be extended to ventilated disc brakes targeted at high performance applications.

The brake disc **401** has a brake member **402** annular around an axis **B** (the axis of rotation of a road wheel or axle, not shown, as with brake disc **101**), and a hub **403.**

### Figures 5A & 5B

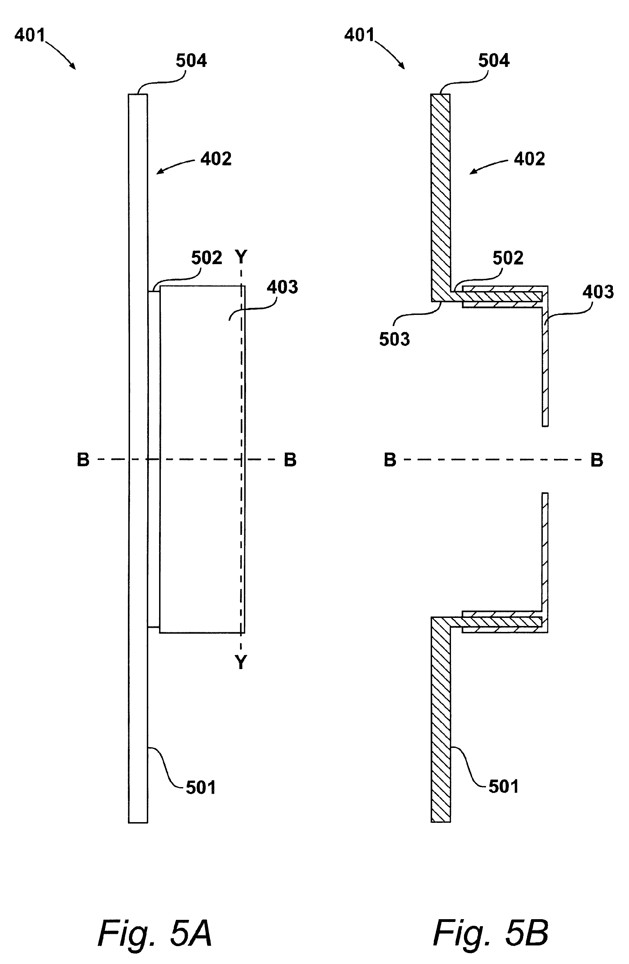

The brake disc **401** is shown in an end-on view in Figure 5A, and in cross section through its axis **B** in Figure 5B. In particular, the differences between the present invention and the prior art brake disc **101** described with reference to Figures 1 to 4 are shown.

The brake member **402** comprises a friction ring **501** annular about axis **B.** The friction ring **501** extends radially in a plane from an inner radius **503** to an outer radius **504.** The brake member further comprises a hollow cylindrical flange **502** extending axially from the friction ring **501** (i.e. orthogonally from its plane). The inner radius **503** of the friction ring **501** is coterminous with the inside surface of the hollow cylindrical flange **502.**

The hub **403** extends axially over both the inner surface and the outer surface of the flange **502.** That is to say, the hub **403** engages radially opposed surfaces of the flange **502** and thereby makes a connection between the hub **403** and the brake member **402.**

It should be noted that the radial flange **203** of the prior art brake disc **101** is necessarily limited in extent because of the need to leave enough of the friction ring **102** clear for the brake pads (not shown). This in turn limits the strength of the cast-on engagement between the prior art hub **103** and the prior art friction ring **102.** By contrast, in the brake disc **401** of the present invention, the hub **403** is cast on to the axially extending flange **502** which does not have such a limitation in extent. Thus the brake disc **401** according to the present invention has much improved strength over the prior art brake disc **101.**

Referring again to Figure 5A, the hub **403** of brake disc **401** is formed of a first material, and the brake member **402** is formed of a second material. In the present embodiment, the first material is selected so that it has a lower density, a lower melting point, and a higher coefficient of linear thermal expansion relative to the second material.

In an embodiment, the first material is iron or an alloy thereof, with the second material being selected so the above properties are satisfied. In another embodiment, the second material is aluminium, or an alloy thereof, with the first material being selected so the above properties are satisfied. In a specific embodiment, the first material is iron or an alloy thereof, and the second material is aluminium or an alloy thereof.

In practice, following selection of the first and second materials in accordance with the above constraints, the brake disc **401** of the present invention is manufactured by first pre-forming the brake member **402** using the selected second material. In the present embodiment, this is achieved in an embodiment by casting the brake member **402,** such that the friction ring **501** and the flange **502** are integrally formed. The brake member **402** may then be machined it. Alternatively, the brake member **402** may be created by coupling a separately-cast friction ring **501** and flange **502** together in a known manner.

The brake member **402** is then located in a mould having a cavity for the flange **502.** The hub **403** is then cast onto the flange by delivering molten first material into the cavity to fill and engage with the flange. The hub **403** is then allowed to cool and solidify in the mould. Optionally, the brake member **402** may be heated prior to delivery of the first material to improve the interface between the materials, and reduce any thermal shock caused by the addition of molten second material.

Those skilled in the art will appreciate that after the hub **403** has been cast on to the flange **502,** the brake disc **401** comprising the hub **403** plus brake member **402** can be subject as a whole to further machining before it is fitted to a vehicle.

The effect of selecting a first material which has a lower density than the second material is to reduce the overall weight of the brake disc **401,** and thereby assist in reduction of unsprung weight, improving vehicle performance and fuel economy.

The effect of selecting a first material which has a lower meting point than the second material is to allow it to be cast onto the pre-formed brake member **402.**

The effect of selecting a first material which has a higher coefficient of linear thermal expansion than the second material is to provide a better (and better protected) joint between the hub **403** and the brake member **402.** As will be appreciated by those skilled in the art, the interface between two materials of differing electrode potential is liable to galvanic corrosion in the presence of an electrolyte, such as is the case when, for example, an aluminium alloy is cast on to grey cast iron.

In the present invention, the second material of the hub **403** is specifically selected to have a higher coefficient of linear thermal expansion than the second material of the brake member **402.** Thus, during manufacture, the hub **403** contracts more than the flange **502** as it cools after being cast. This, in combination with the hub **403** being arranged to extend over both the outer and inner surfaces of the flange **502,** results in a tighter joint between the hub **403** and the flange **502** being formed.

Not only does this result in a stronger joint that can be subjected to greater axial forces, it also results in an interface between the first material and second material that is better protected against the ingress of moisture which could function as an electrolyte and thereby give rise to galvanic corrosion.

By contrast, the principal shrinkage of the prior art hub **103** after casting will be away from the inner radius **503** of the friction ring **102.** This may cause weakening of the connection between the prior art hub **103** and the prior art friction ring **102** and hence a greater risk of moisture penetration and galvanic corrosion in use.

### Figure 6

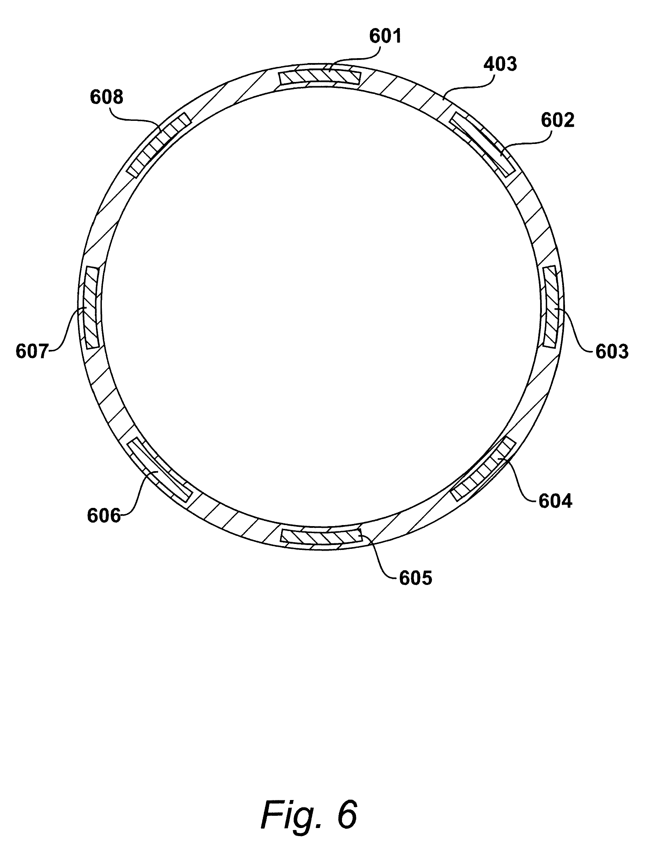

A cross sectional view of the brake disc **401** is shown in Figure 6, along the line **X-X** identified in Figure 5A.

As illustrated in Figure 6, in the present embodiment the flange **502** is formed with axially-directed castellations **601, 602, 603, 604, 605, 606, 607,** and **608** encapsulated in the casting of the hub **403.** It will be appreciated that for simplicity of illustration, only a few castellations **601** to **608** are shown in Figure 6, and in practice there may be more.

### Figure 7

Various additional features may be provided on the brake disc **401** to improve the general performance disc, and also improve the interface between the brake member **402** and the hub **403.**

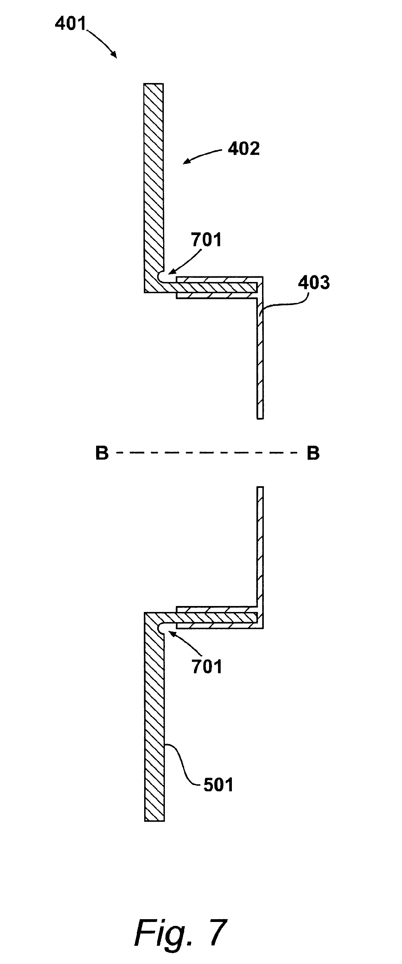

First, an embodiment of the brake disc **401** is shown in Figure 7 in which a circumferential channel **701** is provided at the join of the friction ring **501** and the flange **502.** The inclusion of the circumferential channel **701** has been shown to reduce coning, which is a conical deformation of the friction ring **501** which acts to force the brake pads apart slightly, thereby changing the pressure distribution of the pad and reducing braking effectiveness.

### Figure 8

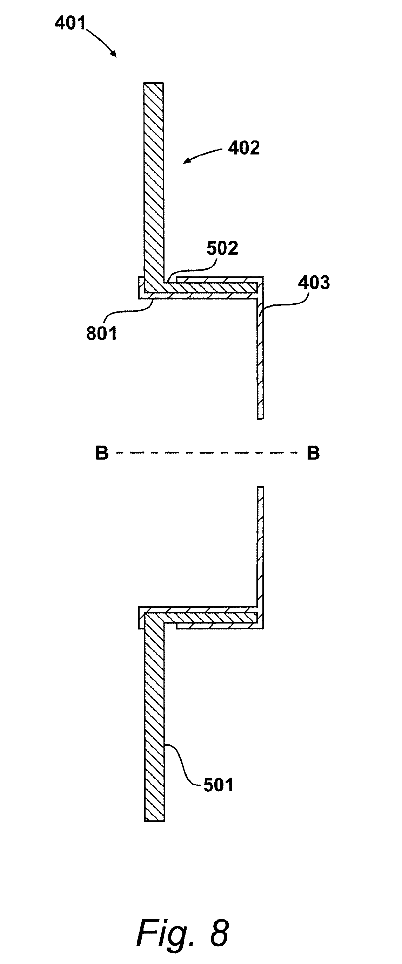

Second, an embodiment of the brake disc **401** is shown in Figure 8 in which the casting of the hub **403** extends axially at **801** over the whole of the inside of the flange **502,** through the inner radius of the friction ring **501** and radially outwards by a small amount. This extension of the casting of the hub **403** strengthens the axial connection with the brake member **402,** allowing the brake disc **401** to withstand greater axial forces on the brake member **402.**

### Figure 9

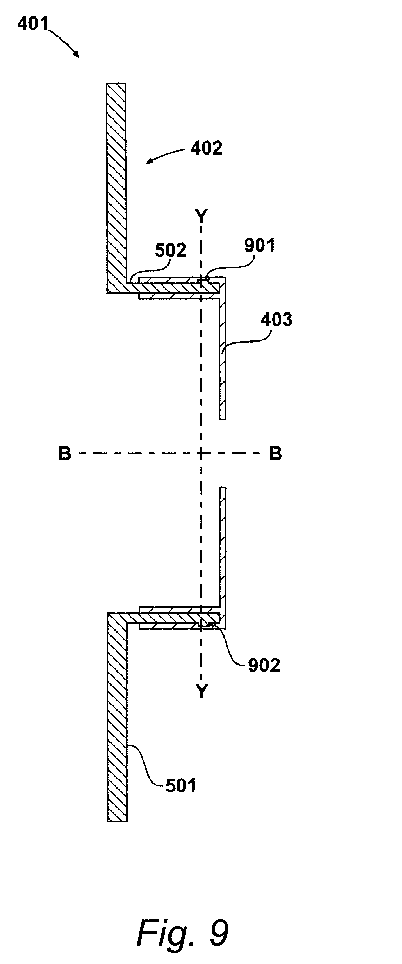

Third, an embodiment of the brake disc **401** is shown in Figure 9 in which the flange **502** is formed with outwardly extending nubs (or lumps) **901** and **902.** The nubs **901** and **902** are encapsulated in the casting of the hub **403** to strengthen the circumferential connection. It will be appreciated that for simplicity of illustration, only two nubs **901** and **902** are visible in Figure 9, but in practice there may be more. In an alternative embodiment, the nubs could be replaced by one single circumferential flange.

### Figure 10

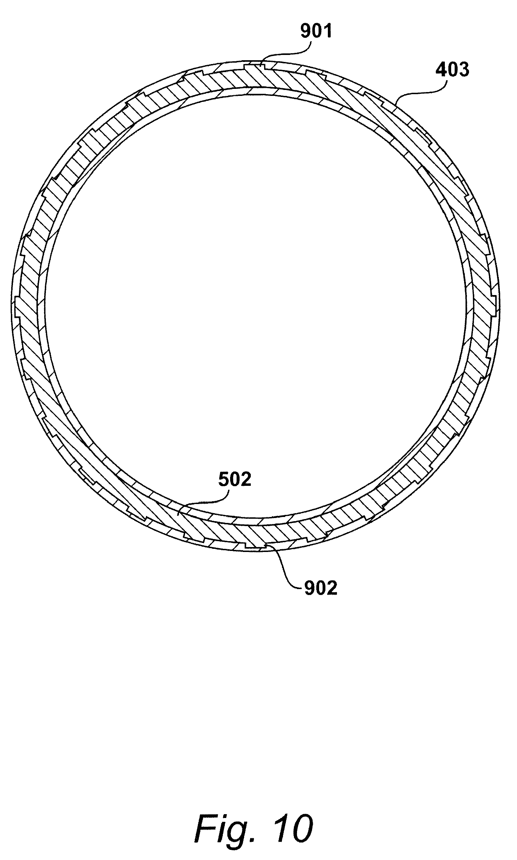

A cross sectional view of the brake disc **401** is shown in Figure 10, along the line **Y-Y** identified in Figure 9.

As can be seen, holes 1101 and 1102 extend axially and in the present embodiment, an even radial distribution of holes is included. Thus, during casting the holes **1001** and **1002** are filled with the first material of the hub **403** and strengthen its circumferential connection with the flange **502** of the brake member **402**

### Figure 11

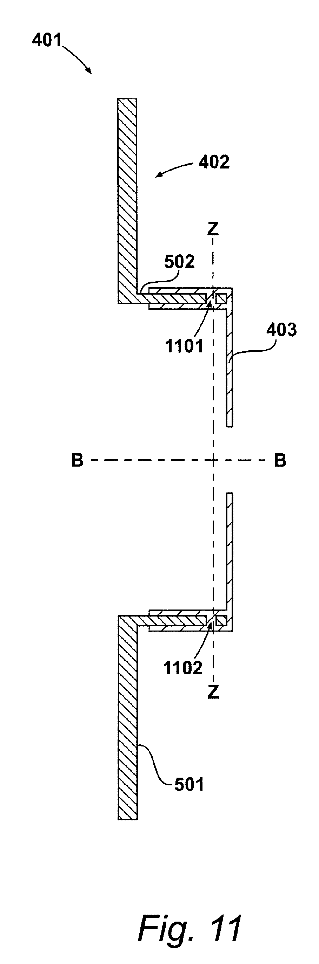

Finally, an embodiment of the brake disc **401** is shown in Figure 11 in which the flange **502** is formed with holes in it, such as holes **1101** and **1102.** In an embodiment the holes are formed when casting the brake member **403** by inclusion of appropriate holes in its mold. In an alternative embodiment the holes may be formed during the machining of the brake member **402.**

### Figure 12

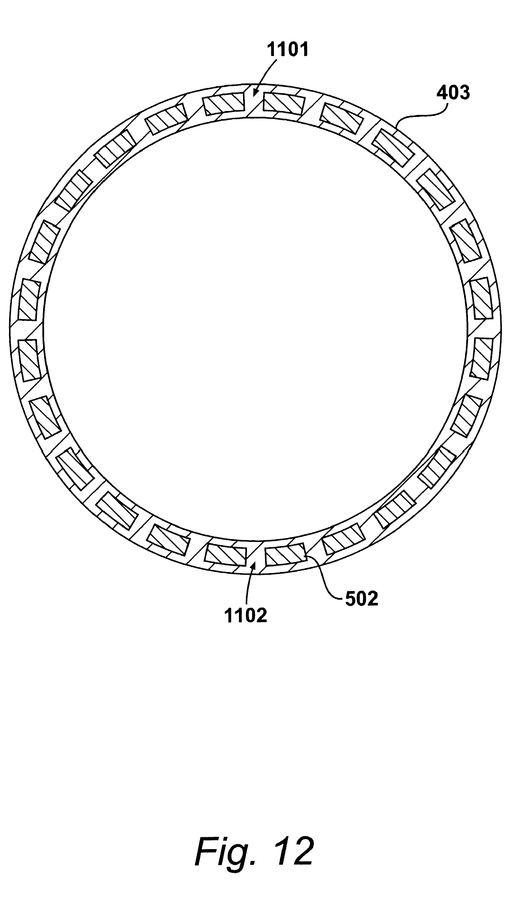

A cross sectional view of the brake disc **401** is shown in Figure 12, along the line **Z-Z** identified in Figure 11.

As can be seen, holes **1101** and **1102** extend axially and in the present embodiment, an even radial distribution of holes is included. Thus, during casting the holes **1101** and **1102** are filled with the first material of the hub **403** and strengthen its circumferential connection with the flange **502** of the brake member **402.**

In an alternative embodiment, the holes may be substituted for recesses extending only part way through the radial thickness of the flange **502,** rather than completely therethrough as holes **1101** and **1102** do. Such recesses may either be recesses in the outer surface of the flange **502** or recesses in its inner surface.

It should be understood that the axial castellations **601** to **608,** the circumferential channel **701,** the axially extended casting **801,** the nubs **901** and **902** (or circumferential flange) and the holes **1101** and **1102** (or recesses) may be used together in any combination.

## Claims

1. A brake disc (401) for a vehicle, which brake disc comprises:
a hub (403) securable to a wheel or an axle of the vehicle for rotation therewith about an axis (B); and
a brake member (402) comprising an annular friction ring having an inner radius (503) and an outer radius (504), and an axially extending hollow cylindrical flange (502) having an inner surface and an outer surface;
wherein the hub is formed of a first material and the friction ring is formed of a second material; **characterised in that:**
the hub is a casting Which extends over the inner surface and the outer surface of the flange, and
the first material has a lower density, a lower melting point, and a higher coefficient of linear thermal expansion than the second material.

2. A brake disc as claimed in claim 1, wherein the first material comprises aluminium or an alloy thereof.

3. A brake disc as claimed in claim 1 or claim 2, wherein the second material comprises iron or an alloy thereof.

4. A brake disc as claimed in any one of claims 1 to 3, wherein the friction ring (501) and the flange (502) are an integrally formed casting.

5. A brake disc as claimed in any one of claims 1 to 4, wherein the flange is formed with axially extending castellations (602).

6. A brake disc as claimed in any one of claims 1 to 5, wherein the hub (403) further extends (801) through the inner radius of the friction ring (501) and axially outwards.

7. A brake disc as claimed in any one of claims 1 to 6, wherein the flange (502) includes one or more radially extending nubs (901, 902) which are encapsulated in the casting of the hub (403).

8. A brake disc as claimed in any one of claims 1 to 7, wherein the flange (502) has one or more holes (1001, 1002) extending radially through the flange, which holes are filled with the first material.

9. A brake disc as claimed any one of claims 1 to 8, wherein the flange (502) has one or more recesses extending radially part way through the flange, which recesses are filled with the first material.

10. A vehicle comprising at least one brake disc as claimed in any one of claims 1 to 9.

11. A method of manufacturing a brake disc (401) having a hub (403) of a first material and a brake member (402) of a second material, said method **characterised by** steps of:
selecting a first material that has a lower density, a lower melting point, and a higher coefficient of linear thermal expansion than the second material;
pre-forming the brake member as an annular friction ring (501) extending in a plane between an inner radius (503) and an outer radius (503) with a hollow cylindrical flange (502) extending orthogonally to the plane of the friction ring;
providing a mould having a cavity configured to receive the flange of the preformed brake member, and wherein the cavity has the shape of the hub;
locating the preformed brake member so that the flange is received in the cavity; and
casting the hub by delivering the first material in a molten state into the cavity to fill it and engage the flange, and allowing the first material to cool and solidify in the mould.

12. A method of manufacturing a brake disc as claimed in claim 11, wherein the first material comprises aluminum or an alloy thereof, and the second material comprises iron or an alloy thereof.

13. A method of manufacturing a brake disc as claimed in claim 11, wherein the step of pre-forming the brake member comprises casting and machining.

14. A method of manufacturing a brake disc as claimed in claim 13, wherein the casting and machining of the brake member comprises forming at least one of:
axially extending castellations on the flange;
one or more radially extending nubs on the flange to be encapsulated in the casting of the hub;
one or more holes in the flange to be filled by the first material during casting of the hub; and
one or more recesses extending radially part way through the flange to be filled with the first material during casting of the hub.

15. A method of manufacturing a brake disc as claimed in claim 11, further comprising the step of heating the brake member before delivering the first material into the cavity.
